# EUROPÄISCHE PATENTSCHRIFT

(11) **EP 0 456 267 B1**
(45) Veröffentlichungstag und Bekanntmachung des Hinweises auf die Patenterteilung: **22.02.1995**
(21) Anmeldenummer: 91107651.1
(22) Anmeldetag: 10.05.1991
(51) Int. Cl.: C08L 33/24

(54) **Homogene Polymermischungen aus Polymetacrylimid-Polymeren**
Homogeneous polymer compositions of polymethacryl-imide-polymers
Compositions homogènes de polymères de polyméthacryl-imide

(30) Priorität: 11.05.1990 DE 4015182
(43) Veröffentlichungstag der Anmeldung: 13.11.1991
(73) Patentinhaber: Röhm GmbH, 64293 Darmstadt (DE)
(72) Erfinder: Höss, Werner, W-6056 Heusenstamm (DE); Vetter, Heinz, Dr., W-6101 Rossdorf 1 (DE); Fischer, Jens-Dieter, Dr., W-6101 Bickenbach (DE); Schikowsky, Hartmut, W-6101 Darmstadt (DE)

(56) Entgegenhaltungen:
- EP-A- 0 216 505

## Beschreibung

### Stand der Technik

Aus der EP-A 216 505 ist bekannt, daß Polymethacrylalkylimide mit anderen thermoplastischen Polymeren schwer verträglich sind, wenn sie mehr als etwa 0,3 bis 0,4 Milliäquivalente an Carbonsäure- oder Carbonsäureanhydridgruppen enthalten. Das entspricht einem Gehalt von etwa 2,5 bis 3,5 Gew.-% an Methacrylsäure- und/oder Methacrylsäureanhydrid-Einheiten. Solche Einheiten entstehen neben Methacrylsäurealkylimid-Einheiten bei der Umsetzung von Polymethylmethacrylat mit primären Aminen. Bei hohen Imidierungsgraden, d.h. wenn 95 % oder mehr der imidierbaren Gruppen des Polymerisats zu Imidgruppen umgesetzt sind, liegt der Gehalt an Carbonsäure- oder Anhydridgruppen in der Regel unter der oben genannten Grenze. Gemäß der Lehre dieser Druckschrift wird die Mischbarkeit der Polymethacrylalkylimid-Polymeren mit anderen thermoplastischen Polymeren verbessert, wenn die Methacrylsäure- und/oder Methacrylsäureanhydrid-Einheiten insgesamt unter 2,5 bis 3,5 Gew.-% vermindert werden. Das kann durch eine Nachbehandlung des Polymeren mit einem Alkylierungsmittel, wie Orthoameisensäureestern, unter Bildung von Methacrylester-Einheiten geschehen. Dies ist jedoch ein zusätzlicher, teurer und darum unerwünschter Verfahrensschritt.

In der EP-A 216 505 werden vor allem Mischungen von Polymethacrylalkylimid-Polymeren mit anderen Polymeren beschrieben. Über Mischungen von Polymethacrylalkylimid-Polymeren untereinander wird ausgesagt, daß sie homogen sind, wenn wenigstens eines der an der Mischung beteiligten Polymeren in der oben angegebenen Weise nachalkyliert worden ist.

Die Homogenität einer Polymermischung läßt sich durch eine differential-calorimetrische Untersuchung (DSC) sicher feststellen. Eine homogene Polymermischung läßt bei dieser Untersuchung nur einen Wert der Glasübergangstemperatur erkennen. Inhomogene Mischungen, in denen mehrere Polymerisatphasen getrennt voneinander vorliegen, zeigen mehrere Werte der Glasübergangstemperatur, die den Glasübergangstemperaturen der einzelnen Phasen entsprechen. Die anwendungstechnischen Eigenschaften der Mischung ändern sich, sobald die Glasübergangstemperatur überschritten wird. Sind an einer Mischung unterschiedliche Polymere mit verschieden hohen Glasübergangstemperaturen beteiligt, so kommt es im Falle einer inhomogenen Polymermischung zu einer derartigen Änderung der Gebrauchseigenschaften, sobald die niedrigste Glasübergangstemperatur der beteiligten Phasen überschritten wird. Dagegen liegt in einer homogenen Mischung die einzige Glasübergangstemperatur bei einem Wert zwischen denen der einzelnen Phasen, also stets höher als die niedrigste Glasübergangstemperatur der einzelnen Mischungskomponenten. Wenn durch die Abmischung verschiedener Polymerer die Glasübergangstemperatur auf einen bestimmten Wert eingestellt werden soll, so ist die homogene Mischbarkeit der Polymeren eine grundsätzliche Voraussetzung für die Erreichbarkeit dieses Ziels. In entsprechender Weise liegen auch andere anwendungstechnisch wichtige Eigenschaften von Polymermischungen, wie z.B. die Wasseraufnahmefähigkeit, nur dann in einem günstigeren Bereich als die in dieser Eigenschaft ungünstigste Komponente, wenn die Mischung homogen ist.

Polymethacrylalkylimid-Polymere sind in der Regel mit anderen Polymeren nicht verträglich, d.h. nicht homogen mischbar, wenn sie mehr als 2,5 bis 3,5 Gew.-% an Methacrylsäure-Einheiten (MAS) enthalten. Dagegen ist nach Feststellung der Erfinder der Einfluß von Methacrylsäureanhydrid-Einheiten (MAH) auf die Verträglichkeit gering. Beispielsweise ist ein Polymethacrylalkylimid-Polymer mit einem Imidierungsgrad von 52 %, das 2,5 Gew.-% MAS und 5 Gew.-% MAH enthält, mit Polymethylmethacrylat nicht verträglich. Auch ein nahezu vollständig imidiertes Polymethacrylalkylimid-Polymer, z.B. mit einem Imidierungsgrad von 97 % und weniger als 2 Gew.-% MAS, ist mit einem Polymethacrylalkylimid-Polymer von niedrigem Imidierungsgrad (25 %, 1,6 Gew.-% MAS, 7,3 Gew.-% MAH) nicht verträglich.

### Aufgabe und Lösung

Die aus anwendungstechnischer Sicht wichtigste Eigenschaft der Polymethacrylalkylimid-Polymeren im Vergleich zu anderen technischen Polymeren ist ihre verhältnismäßig hohe Glasübergangstemperatur. Sie liegt für reines Polymethacrylmethylimid bei etwa 175^{o}C. Die thermoplastische Verarbeitung dieses Polymeren erfordert Temperaturen, die noch etwa 130^{o}C über diesem Wert liegen. Außerdem hat es eine deutlich höhere Schmelzviskosität als ein Polymethacrylmethylimid von niedrigerem Imidierungsgrad, sowie meistens auch eine gelbliche Farbe.

Da bei der Verarbeitung von thermoplastischen Kunststoffen grundsätzlich eine möglichst niedrige Verarbeitungstemperatur angestrebt wird und diese umso niedriger liegen kann, je niedriger die Glasübergangstemperatur des Polymers liegt, ist es wünschenswert, daß die Glasübergangstemperatur des verarbeiteten Polymeren nicht höher liegt, als aus anwendungstechnischen Gründen unbedingt erforderlich. Gleichzeitig besteht ein Interesse daran, die hohe Viskosität und die gelbliche Farbe des reinen Polymethacrylmethylimids zu vermeiden.

Da die Glasübergangstemperatur von Polymethacrylalkylimid-Polymeren - ausgehend von Polymethylmethacrylat - mit dem Imidierungsgrad kontinuierlich ansteigt, ist es grundsätzlich durch die Wahl des Imidierungsgrades möglich, Polymethacrylalkylimid-Polymere mit jeder gewünschten Glasübergangstemperatur zwischen 107 und 175^{o}C herzustellen. Um allen anwendungstechnischen Anforderungen der Verarbeiter zu genügen, müßte der Hersteller eine breite Palette unterschiedlich imidierter Polymethacrylalkylimid-Polymerer herstellen und anbieten. Das ist wirtschaftlich kaum vertretbar. Es wäre viel wirtschaftlicher, einige wenige Polymertypen mit unterschiedlichen Imidierungsgraden herzustellen und die im Einzelfall erforderliche Glasübergangstemperatur durch homogene Abmischung herzustellen. Nach den Erkenntnissen der EP 216 505 ist es jedoch für die Herstellung entsprechender Mischungen erforderlich, daß wenigstens eines der beteiligten Polymethacrylalkylimid-Polymeren mit einem Alkylierungsmittel nachbehandelt worden ist, um den MAS- und MAH-Gehalt zu vermindern oder zu eliminieren.

Der Erfindung liegt die Aufgabe zugrunde, homogene Mischungen von Polymethacrylalkylimid-Polymeren, die ohne Nachalkylierung zugänglich sind, bereitzustellen.

Gegenstand der Erfindung ist eine homogene Polymermischung, enthaltend wenigstens zwei Polymethacrylalkylimid-Polymere A und B mit unterschiedlichem Imidierungsgrad. Das Polymethacrylalkylimid-Polymere A enthält 30 bis 90 Gew.-% Methacrylalkylimid-Einheiten und 3,5 bis 10 Gew.-% Methacrylsäure-Einheiten und ist gegebenenfalls zum übrigen Teil überwiegend aus Einheiten des Methylmethacrylats und/oder des Methacrylsäureanhydrids aufgebaut. Das Polymethacrylalkylimid-Polymere B enthält 10 bis 50 Gew.-% mehr Methacrylalkylimid-Einheiten als das Polymethacrylimid-Polymere A. Als Polymer B sind zwei verschiedene Typen von Polymethacrylalkylimid-Polymeren geeignet, die als Polymere B-1 und B-2 bezeichnet werden können. Der Typ B-1 hat einen Imidierungsgrad unter 95 % und enthält 3,5 bis 10 Gew.-% Methacrylsäure-Einheiten. Der Typ B-2 hat einen Imidierungsgrad über 95 % und enthält weniger als 3,5 Gew.-% Methacrylsäure-Einheiten. Der gegebenenfalls verbleibende Teil der Polymeren B-1 oder B-2 ist überwiegend aus Einheiten des Methylmethacrylats und/oder des Methacrylsäureanhydrids aufgebaut.

Polymethacrylalkylimid-Polymere der Typen A und B sind durch Umsetzung von Polymethylmethacrylat mit Imidierungsmitteln ohne Nachalkylierung zugänglich. Es ist deshalb im Rahmen der Erfindung möglich, aus einer Palette von nur drei verschieden hoch imidierten Polymeren, beispielsweise mit 30, 70 und 100 Gew.-% Methacrylalkylimid-Einheiten, homogene Polymermischungen auf Basis von Polymethacrylalkylimiden mit jeder gewünschten Glasübergangstemperatur im Bereich zwischen 125 und 175^{o}C herzustellen, ohne auf eine nur durch das aufwendige Verfahren der Nachalkylierung zugängliche Mischungskomponente zurückgreifen zu müssen. Gewünschtenfalls kann die Palette auch vier oder mehr Polymerisattypen enthalten.

Ein weiterer Vorteil der Erfindung liegt in der Zugänglichkeit von Mischungen mit einem verhältnismäßig niedrigen MAS-Gehalt, die sich durch eine verminderte Wasseraufnahmeneigung und Alkaliempfindlichkeit auszeichnen. Zu diesem Zweck kann als Komponente B ein Polymer von hohem Imidierungsgrad und entsprechend niedrigem Gehalt an Carbonsäure-Einheiten eingesetzt werden, d.h. ein Polymer B-2 mit 95 bis 100 Gew.-% Methacryl-alkylimid-Einheiten und weniger als 3,5 Gew.-% MAS. Durch Abmischung mit einer Komponente A mit niedrigerem Imidierungsgrad entsteht eine Mischung mit einem gewünschten mittleren Imidierungsgrad und entsprechender Erweichungstemperatur, jedoch mit einem deutlich niedrigeren Carbonsäuregehalt als bei einem einheitlichen Polymer von gleichhohem Imidierungsgrad.

Beispielsweise erhält man durch Umsetzung von Polymethylmethacrylat mit der 1,4-fachen grundmolaren Menge an Methylamin ein Polymethacrylmethylimid mit einem Imidierungsgrad von 75 % und einer Vicat-Erweichungstemperatur von 156^{o}C. Es enthält etwa 5 Gew.-% Methacrylsäure- und 2,5 Gew.-% Methacrylsäureanhydrid-Einheiten. Eine Mischung vom gleichen mittleren Imidierungsgrad ist herstellbar aus
50 Gew.-% Polymethacrylmethylimid vom Imidierungsgrad 50 %, 3,5 Gew.-% Methacrylsäure- u. 5,0 Gew.-% Anhydrid-Einh.
Vicat-Erweichungstemperatur 135^{o}C.
50 Gew.-% Polymethacrylmethylimid vom Imidierungsgrad 99 %, 1,0 Gew.-% Methacrylsäure- u.<0,5 Gew.-% Anhydrid-Einh.
Vicat-Erweichungstemperatur 178^{o}C.

Für die Mischung wird ein Gehalt von 1,9 Gew.-% Methacrylsäure- u. 2.9 Gew.-% Anhydrid-Einheiten ermittelt. Die Vicat-Erweichungstemperatur der Mischung beträgt 152^{o}C.

### Ausführung der Erfindung

Die Polymeren A und B lassen sich durch Imidierung von thermoplastischen Polyalkylmethacrylaten nach bekannten Methoden herstellen. Das als Ausgangspolymer verwendete Polymerisat von Alkylestern der Methacrylsäure besteht zu mindestens 24 Gew.-%, im allgemeinen zu mehr als 50 Gew.-%, vorzugsweise zu mehr als 80, besonders bevorzugt zu 95 bis 100 Gew.-% aus Einheiten von Alkylestern der Methacrylsäure mit 1 bis 4 Kohlenstoffatomen im Alkylrest. Bevorzugt ist Methylmethacrylat. Als Comonomere kommen alle damit copolymerisierbaren Monomeren, insbesondere Alkylester der Acrylsäure mit 1 bis 4 Kohlenstoffatomen im Alkylrest, Acryl- und/oder Methacrylsäure, Acryl- und/oder Methacrylnitril, Acryl- und/oder Methacrylamid oder Styrol in Betracht. Bevorzugt sind thermoplastisch verarbeitbare Polymerisate dieser Art mit einer reduzierten Viskosität im Bereich von 20 bis 92 und vorzugsweise von 40 bis 80 ml/g. Sie werden zweckmäßig in Form eines Pulvers oder Granulats mit einer mittleren Teilchengröße von 0,03 bis 3 mm eingesetzt.

Als Imidierungsmittel wird im Regelfall ein primäres aliphatisches Amin, vorzugsweise ein Alkylamin mit 1 bis 12 Kohlenstoffatomen im Alkylrest, insbesondere Methylamin eingesetzt. Auch cycloaliphatische oder araliphatische Amine, wie Cyclohexylamin oder Benzylamin, sind geeignet. Stattdessen können Derivate des primären Amins eingesetzt werden, die sich unter den Bedingungen des Imidierungsverfahrens wie dieses verhalten, d.h. eine Imidierung bewirken. Dazu gehören die Salze der primären Amine mit organischen oder anorganischen Säuren, wie Salzsäure, Kohlensäure, Ameisensäure, Essigsäure, ferner Harnstoffe, Thioharnstoffe, Carbaminate, Guanidine, Formamide, Acetamide, Amide anderer aliphatischer oder aromatischer Carbonsäuren, Sulfonamide. Gegebenenfalls können auch Gemische mehrerer Imidierungsmittel eingesetzt werden.

Als Imidierungsgrad wird der prozentuale Gewichtsanteil der Methacrylalkylimid-Einheiten am Gewicht des Polymeren bezeichnet. Die Größe des Imidierungsgrades hängt von der pro Grundmol an Methacrylestereinheiten eingesetzten Menge an Imidierungsmittel ab. Da die Imidierung in der Regel nicht vollständig abläuft, wird stets mehr als die theoretisch berechnete Menge Imidierungsmittel eingesetzt. Beispielsweise erhält man bei Einsatz von 0,4 bis 0,5 Mol eines Imidierungsmittels pro Grundmol PMMA ein Polymethacrylalkylimid-Polymer vom Typ B-1 mit einem Imidierungsgrad von 30 %. Bei äquivalentem Einsatz des Imidierungsmittels bleibt die Umsetzung bei einem Imidierunsgrad von etwa 60 bis 75 % stehen. Eine Imidierung über 95 % bis 100 % (Typ B-2) wird erst bei einem Einsatz von 1,8 Mol Imidierungsmittel pro Grundmol an Estergruppen oder mehr erreicht.

Das Imidierungsverfahren läuft am besten bei Temperaturen oberhalb der Schmelztemperatur bzw. mindestens 60 bis 120^{o}C oberhalb der Vicat-Erweichungstemperatur des Ausgangspolymeren ab. Bevorzugt ist der Temperaturbereich von 140 bis 400, insbesondere von 200 bis 300^{o}C. Die Umsetzung wird vorzugsweise bei 20 bis 500 bar durchgeführt. Die Umsetzungsdauer richtet sich nach den Reaktionsbedingungen; bei der Imidierung in einem Extruder sind dafür 10 sec bis 30 min, vorzugsweise 1 bis 7 min, ausreichend.

Die Umsetzung kann gewünschtenfalls in Anwesenheit von Lösungs- bzw. Verdünnungsmitteln durchgeführt werden, wie beispielsweise aus US 2 146 209, DE 1 077 872, DE 1 088 231 oder EP 234 726 bekannt. Geeignete Lösungs- bzw. Verdünnungsmittel sind vor allem solche, die bei Raumtemperatur flüssig und bei erhöhter Temperatur, gegebenenfalls bei Unterdruck, flüchtig sind und sich von dem imidierten Polymerisat leicht abtrennen lassen. Zu den verwendbaren Lösungs- bzw. Verdünnungsmitteln zählen Mineralöle, Benzinkohlenwasserstoffe, Aromaten, Alkanole, Ether, Ketone, Ester, Halogen-Kohlenwasserstoffe, sowie auch Wasser.

Die Polymeren A und B werden getrennt erzeugt und anschließend im gewünschten Verhältnis gemischt. Geeignete Mischungsverhältnisse liegen z.B. zwischen 1 : 99 bis 99 : 1, vorzugsweise 10 : 90 bis 90 : 10. Der Gehalt an Carbonsäure- und Anhydridgruppen zu ist umso niedriger, je höher der Anteil des Polymeren A und je niedriger dessen Gehalt an Carbonsäure- und Anhydridgruppen liegt; vorzugsweise bildet das Polymer A 20 bis 60 Gew.-% des Gemisches.

Da die Polymeren A und B im Zustand einer Schmelze oder einer Lösung erzeugt werden, ist es zweckmäßig, sie gleich in dieser Form zu vermischen, ohne sie zuvor abzukühlen oder vom Lösemittel abzutrennen. Die Polymeren A und B können z.B. jeweils für sich in einem Schneckenextruder erzeugt und aus diesen in einen dritten Schneckenextruder eingespeist werden, wo sie gleichmäßig vermischt werden. Dort können in einer geeigneten Entgasungszone die flüchtigen Reaktionsprodukte, d.h. das bei der Imidierung abgespaltene Alkanol sowie überschüssiges Amin und ein gegebenenfalls mitverwendetes Lösungsmittel dampfförmig entfernt werden. Das von flüchtigen Bestandteilen befreite Polymerisatgemisch wird anschließend extrudiert, gekühlt und granuliert. Gegebenenfalls kann die Schmelze unmittelbar zu Platten- oder Folienbahnen oder zu Profilen extrudiert werden.

Das erhaltene Polymergemisch kann als Formmassengranulat in bekannter Weise thermoplastisch verarbeitet werden. Dank seines verminderten Gehalts an Carbonsäuregruppen zeichnet es sich durch eine verbesserte Mischbarkeit und Verträglichkeit mit weiteren Polymerisaten, wie z.B. Polyamiden oder Styrol-Acrylnitril-Mischpolymerisaten, aus. Aus dem gleichen Grund ist die Wasseraufnahme bei Feuchtigkeitseinwirkung um 1 bis 2 Gew.-% geringer. Dadurch ist auch die Gefahr der Rißbildung infolge einer durch Wasseraufnahme bewirkten Quellspannung vermindert.

### BEISPIEL

Folgende Polymethacrylmethylimide werden zur Herstellung von erfindungsgemäßen Mischungen verwendet:

| | % MMI | % MAS | % MAH | % MAS+MAH | Vicat-ET |
|---|---|---|---|---|---|
| P1 | 99 | 1 | 0 | 1 | 178^{o}C |
| P2 | 50 | 3,5 | 5,0 | 8,5 | 135^{o}C |
| P3 | 70 | 4,0 | 3,6 | 7,6 | 150^{o}C |
| MMI = Methacryl-methylimid-Einheiten (in Gew.-%) MAS = Methacrylsäure-Einheiten (in Gew.-%) MAH = Methacrylsäureanhydrid-Einheiten (in Gew.-%) Der Rest sind Methylmethacrylat-Einheiten. | | | | | |

Aus dem Polymethacrylmethylimiden P1 bis P3 werden durch Mischen der Schmelzen im Extruder bei 250 bis 300^{o}C Mischungen mit folgenden Zusammensetzungen und Eigenschaften erzeugt:

| Zusammensetzung | MMI | MAS | MAH | MAS+MAH | Vicat-ET |
|---|---|---|---|---|---|
| 50 % P1 + 50 % P2 | 75 | 2,4 | 2,9 | 5,3 | 152^{o}C |
| 50 % P1 + 50 % P3 | 85 | 1,8 | 3,2 | 5,0 | 165^{o}C |

Die drei Mischungen sind transparent und ergeben bei der Differentialthermoanalyse einen einzigen Glasübergangspunkt. Daraus folgt, daß die Mischung homogen ist.
Mischt man zum Vergleich auf die gleiche Weise
50 Gew.-T Polymethylmethacrylat und
50 Gew.-T Polymethacrylmethylimid P4 (50 % MMI)
so entsteht eine milchig trübe Mischung, die zwei getrennte Glasübergangstemperaturen bei 109 und 132 Grad C hat. Sie entsprechen den Komponenten PMMA und P4.

Mischt man gleiche Teile von Polymethacrylmethylimiden folgender Zusammensetzungen:
P5 25 % MMI, 1,5 % MAS, 7,3 % MAH, VET 121 Grad C
P6 97 % MMI, 2,5 % MAS, 0 % MAH, VET 173 Grad C
So entsteht ebenfalls eine milchig trübe Mischung. Sie hat zwei getrennte Glasübergangstemperaturen bei 126 und 161 Grad C, die den Komponenten P5 und P6 zuzuordnen sind.
Daraus folgt, daß eine Mischbarkeit der Polymethacrylmethylimide außerhalb des beanspruchten Bereichs nicht gegeben ist.

## Patentansprüche

1. Homogene Polymermischung, enthaltend wenigstens zwei Polymethacrylalkylimid-Polymere A und B mit unterschiedlichem Imidierungsgrad,
dadurch gekennzeichnet,
daß das Polymethacrylalkylimid-Polymer A
30 bis 90 Gew.-% Methacrylalkylimid-Einheiten und
3,5 bis 10 Gew.-% Methacrylsäure-Einheiten
enthält und gegebenenfalls zum übrigen Teil überwiegend aus Einheiten des Methylmethacrylats und/oder des Methacrylsäureanhydrids aufgebaut ist,
und daß das Polymethacrylalkylimid-Polymere B
10 bis 50 Gew.-% mehr Methacrylalkylimid-Einheiten als das Polymethacrylimid-Polymere A enthält und entweder
(B-1) 3,5 bis 10 Gew.-% Methacrylsäure-Einheiten enthält, wenn sein Imidierungsgrad unter 95 % liegt, oder
(B-2) weniger als 3,5 Gew.-% Methacrylsäure-Einheiten enthält, wenn sein Imidierungsgrad über 95 % liegt,
und gegebenenfalls zum übrigen Teil überwiegend aus Einheiten des Methylmethacrylats und/oder des Methacrylsäureanhydrids aufgebaut ist.

## Claims

1. A homogenous polymer mixture containing at least 2 polymethacrylalkylimide Polymers A and B with a different degree of imidification, characterised in that the polymethacrylalkylimide Polymer A contains
30 to 90 wt.% of methacrylalkylimide units and
3.5 to 10 wt.% of methacrylic acid units
and is, optionally, for the remaining part, largely synthesised from units of methylmethacrylate and/or methacrylic acid anhydride, and that the polymethylacrylimide Polymer B contains
10 to 50 wt.% more methacrylalkylimide units than the polymethacrylimide Polymer A and contains either
(B-1) 3.5 to 10 wt.% of methacrylic acid units, if its degree of imidification is below 95%, or
(B-2) less than 3.5 wt.% of methacrylic acid units, if its degree of imidification is above 95%,
and is, optionally, for the remaining part, largely synthesised from units of methylmethacrylate and/or methacrylic acid anhydride.

## Revendications

1. Mélange homogène de polymères, contenant au moins deux polymères de polyméthacrylalkylimide A et B ayant des degrés d'imidation différents, caractérisé en ce que le polymère de polyméthacrylalkylimide A contient
30 à 90% en poids de motifs méthacrylalkylimide et
3,5 à 10% en poids de motifs acide méthacrylique et
se compose éventuellement, pour la partie restante, principalement de motifs de méthacrylate de méthyle et/ou d'anhydride méthacrylique,
et en ce que le polymère de polyméthacrylalkylimide B contient
10 à 50% en poids de motifs méthacrylalkylimide de
plus que le polymère de polyméthacrylimide A, et
(B-1) soit il contient de 3,5 a 10% en poids de motifs acide méthacrylique lorsque son degré d'imidation se situe au-dessous de 95%,
(B-2) soit il contient moins de 3,5% en poids de motifs acide méthacrylique lorsque son degré d'imidation se situe au-dessus de 95%,
et il se compose éventuellement, pour la partie restante, principalement de motifs deméthacrylate de méthyle et/ou d'anhydride méthacrylique.
